# EUROPEAN PATENT APPLICATION

(11) **EP 3 839 899 A1**
(43) Date of publication of application: **23.06.2021**
(21) Application number: 19218130.3
(22) Date of filing: 19.12.2019
(51) Int. Cl.: G07C 9/20, G07F 7/08, G06K 19/00, G06K 7/00, H05K 7/14, G09F 3/20, A45F 5/02

(54) **WEARABLE BADGE AND METHOD FOR DETERMINING A TYPE OF AN IDENTIFICATION CARD REMOVABLY HELD IN SAID BADGE**

(71) Applicant: GWA Hygiene GmbH, 18435 Stralsund (DE)
(72) Inventor: WALZ, Marcel, 18437 Stralsund (DE); GEBHARDT, Tobias, 18119 Rostock (DE)
(74) Representative: Röthinger, Rainer

(57) **Abstract**

Disclosed is a wearable badge (100) for holding an identification card (200). The badge (100) comprises a card holder (2) configured to removably hold an identification card (200), a first optical sensor (16) configured to measure an optical property of a first region (22) of a surface of the identification card (200) when removably held by the card holder (2), and a processor (20) configured to determine a type of the identification card (200) based on the measured optical property of the first region (22). Furthermore, a system is provided comprising the badge (100) and a set of identification cards (200), wherein at least some of the first regions (22) comprised by the set of identification cards (200) have different optical properties that encode different types of identification cards. Also disclosed is a method of determining a type of an identification card (200).

## Description

### Technical Field

The present disclosure relates to a wearable badge comprising a processor configured to determine a type of an identification card, to a method of determining a type of an identification card removably held in said badge, and to a system comprising the wearable badge and a plurality of identification cards.

### Background

An identification card typically comprises printed labels and a picture such that a person owning the identification card is identifiable by access control systems or other persons such as security personnel. In many environments, identification cards have to be used to access certain areas. Identification cards are also used to pay for food and drinks in a canteen. An identification card may also interact with a monitoring system which obtains information about a location of the identification card or about an action performed by a person carrying the identification card. For these purposes, an identification card may comprise a magnetic strip or a radio frequency identification, RFID, chip storing identification information associated with a certain person.

Each time a particular identification card is used, for example for accessing an area or to pay for food and drinks, data can be collected which is associated with that identification card. This enables monitoring of actions performed by a certain person carrying the identification card. However, in some cases, such a person-specific monitoring is not allowed and an anonymization needs to be performed after having collected the data.

Still further, in some cases, identification cards do not comprise magnetic strips or RFID chips but only the printed labels and pictures. Whilst this lowers production costs of the identification cards, sophisticated camera-based monitoring systems are required in order to collect the data for a particular identification card.

### Summary

It is an object of the present disclosure to provide a device configured to efficiently obtain information from an identification card.

According to a first aspect, a wearable badge for holding an identification card is provided. The badge comprises a card holder configured to removably hold an identification card and a first optical sensor configured to measure an optical property of a first region of a surface of the identification card when removably held by the card holder. The badge further comprises a processor configured to determine a type of the identification card based on the measured optical property of the first region.

The optical property may comprise at least one parameter chosen from color, brightness and reflectivity. Different optical properties (e.g., different colors) may encode different types of identification cards.

The processor is for example configured to determine the type of the identification card based on a predetermined optical property associated with the type of the identification card. The badge may further comprise a storage unit retrievably storing at least the predetermined optical property associated with the type of the identification card.

The processor is in one example configured to determine the type of the identification card upon detecting that the identification card is stationarily held by the card holder. According to a variant, the processor is configured to detect that the identification card is stationarily held by the card holder when measurements of the first optical sensor do not change in time.

The first optical sensor may further be configured to, if no identification card is being held by the card holder, measure an optical property representing an empty badge. The processor is for example further configured to determine that no identification card is being held by the card holder based on the measured optical property representing the empty badge.

In an example, the first optical sensor or a second optical sensor comprised in the badge is configured to, when no identification card is being held by the card holder and a component is positioned remote from the card holder, measure an optical pattern of a second region of a surface of the component. The processor may further be configured to extract information represented by the measured optical pattern.

The card holder for example comprises a first opening or a transparent portion arranged in a detection direction of at least one sensor chosen from the first optical sensor and the second optical sensor. The opening or transparent portion may be arranged such that the at least one sensor is capable of measuring the optical pattern of the second region through the first opening or the transparent portion, when no identification card is removably held by the card holder and the component is positioned remote from the card holder.

The badge may further comprise an output unit configured to provide a feedback signal to a user of the badge. The output unit in one example comprises a display configured to visualize the extracted information or information derived from the extracted information. In addition, or as an alternative, to a visual feedback signal, the output unit may provide at least one of an acoustic feedback signal and a haptic feedback signal.

For example, the processor is further configured to trigger generation of the feedback signal by the output unit upon having determined the type of the identification card. According to a variant, the processor is further configured to determine, based on feedback information associated with the determined type of the identification card, the feedback signal to be generated by the output unit.

The card holder may be configured to at least partially encase the identification card to removably hold the identification card. The card holder in one example comprises a second opening configured such that the identification card can be slided into the card holder through the second opening.

The processor is for example further configured to generate a dataset comprising at least the determined type of the identification card. The processor may be configured to retrievably store the dataset. In one example, the processor is further configured to generate the dataset when a predefined condition associated with the determined type of the identification card is fulfilled. Different types of identification cards may be associated with different predefined conditions.

The badge may further comprise an interface unit configured to transmit at least an indication of the determined type of the identification card. The interface unit may be configured to transmit only the indication of the determined type of the identification card. The interface unit is for example configured to transmit the indication to at least one receiver associated with the determined type of the identification card.

According to a second aspect, a system is provided. The system comprises the wearable badge of the first aspect and a set of identification cards. At least some of the first regions comprised by the set of identification cards may have different optical properties. The different optical properties for example encode different types of identification cards.

According to a third aspect, a method of determining a type of an identification card is provided. The method comprises removably holding, by a card holder comprised in a wearable badge, an identification card. The method further comprises measuring, by a first optical sensor comprised in the wearable badge, an optical property of a first region of a surface of the identification card. The method also comprises determining, by a processor comprised in the wearable badge, a type of the identification card based on the measured optical property of the first region.

According to a fourth aspect, a computer program is provided. The computer program comprises instructions which, when the program is executed by a processor, cause the processor to obtain an optical property of a first region of a surface of an identification card when removably held by a card holder comprised in a wearable badge, and to determine a type of the identification card based on the measured optical property of the first region. Alternatively or additionally, a computer program product may be provided, wherein the computer program product comprises instructions which, when the computer program is executed by a processor, cause the processor to obtain an optical property of a first region of a surface of an identification card when removably held by a card holder comprised in a wearable badge, and to determine a type of the identification card based on the measured optical property of the first region.

According to a fifth aspect, a computer-readable medium is provided. The computer-readable medium has stored thereon the computer program or the computer program product of the fourth aspect.

According to a sixth aspect, a data carrier signal is provided. The data carrier signal carries the computer program or the computer program product of the fourth aspect.

### Brief Description of the Drawings

In the following, several embodiments of the present disclosure are described with reference to the drawings, wherein
- Fig. 1: shows an embodiment of a wearable badge;
- Fig. 2: shows an embodiment of an identification card;
- Fig. 3: shows the identification card partially inserted into the wearable badge;
- Fig. 4: shows the identification card fully inserted into the wearable badge;
- Fig. 5: shows an embodiment of a method of determining a type of the identification card held in the wearable badge;
- Fig. 6: shows an embodiment of a system comprising the wearable badge and a central control unit; and
- Fig. 7: shows a further embodiment of the identification card.

### Detailed Description

In the following description, exemplary embodiments of a wearable badge, a system and a method according to the present disclosure will be explained with reference to the drawings. The same reference numerals will be used to denote the same or similar structural features or method steps.

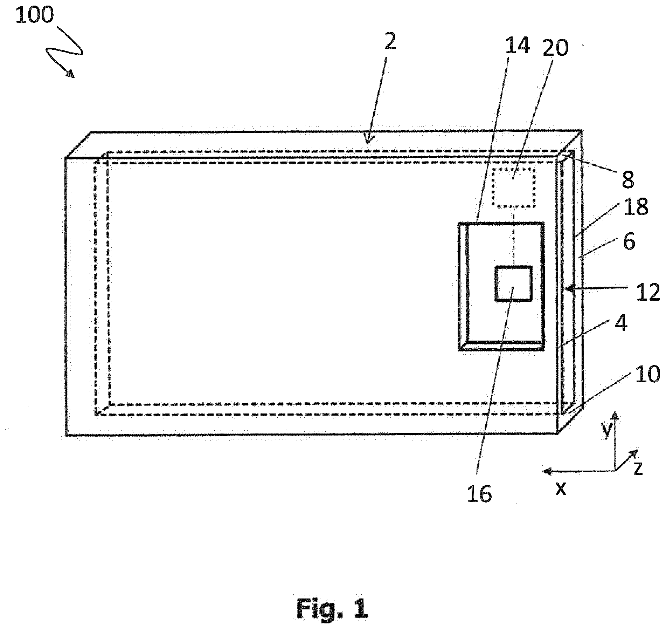

Fig. 1 shows an embodiment of a wearable badge 100. The wearable badge 100 comprises a card holder 2. The card holder 2 comprises a front portion 4, a back portion 6, a top portion 8 and a bottom portion 10 encasing a slot 12. The slot 12 has a shape of a substantially rectangular cuboid. The wearable badge 100 may comprise a structural feature such as a clip (not shown) so that the wearable badge 100 can be attached to a garment of a person who is the wear the badge 100.

Still referring to Fig. 1, a first opening 14 extends into a depth direction z of the wearable badge 100 through the front portion 4 to the slot 12. The first opening 14 is arranged in a detection direction of a first optical sensor 16 comprised in the badge 100. Additionally to the first optical sensor 16, the wearable badge 100 may comprise a second optical sensor (not shown).

The first optical sensor 16 and the second optical sensor are configured to detect light incident thereon. These sensors may be capable of detecting a light intensity of light having a certain wavelength or wavelength range. Additionally, these sensors may be configured to determine a spectrogram of the incident light, thereby detecting a light intensity for each of a plurality of wavelengths. In one exemplary configuration, one or both of the first optical sensor 16 and the second optical sensor comprises at least one photoresistive element. In another exemplary configuration, one or both of the first optical sensor 16 and the second optical sensor comprises at least one photosensitive semiconducting element such as a photodiode. One or both of the first optical sensor 16 and the second optical sensor may be sensitive for spatially varying light, for example by being comprising a camera chip such as a charge-coupled device (CCD).

The first optical sensor 16, and optionally the second optical sensor, is arranged on the back portion 6 of the card holder 2 such that its detection direction extends into the slot 12. In particular, the detection direction extends opposite to the depth direction z into the direction of the front portion 4 and through the first opening 14. Instead of or in addition to the first opening 14, the card holder 2 may comprise a transparent portion arranged in the same location as the first opening 14, such that the first and/or second optical sensor 16 is capable of performing a measurement through the transparent portion when no identification card is inserted in the slot 12.

The card holder 2 further comprises a second opening 18. The second opening 18 is configured such that an identification card (not shown) can be inserted into the slot 12 of the card holder 2 through the second opening 18. The card holder 2 is configured to removably hold the identification card within the slot 12. The slot 12 extends from the second opening 18 essentially into a length direction x of the wearable badge 100. The length direction x corresponds to a longitudinal direction of the wearable badge 100. One side of the slot 12 is formed by the second opening 18.

The wearable badge 100 further comprises a processor 20. The first optical sensor 16, and optionally the second optical sensor, is electrically connected to the processor 20.

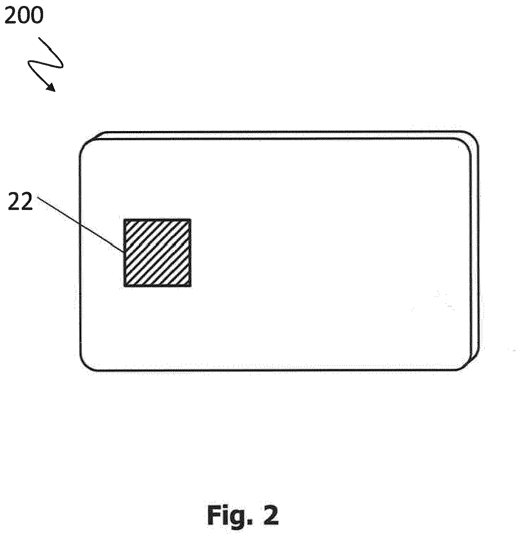

Fig. 2 shows an embodiment of an identification card 200. The identification card 200 is configured to be slidably moved through the second opening 18 into the slot 12 of the card holder 2. The card holder 2 is configured to removably hold the identification card 200 within the slot 12. The identification card 200 may comply with a national or an international standard such as ISO/IEC 7810 ID-1.

The identification card 200 may identify at least one of a certain person and a certain group of persons. Especially in the latter case, the type of identification card may be encoded by an optical property of the identification card 200. This means that each member of the group of persons is associated with an identification card 200 having the same optical property, and the identification card 200 may not necessarily be personalized.

The identification card 200 comprises a surface having a region 22. The region 22 exhibits an optical property that encodes a type of the identification card 200. The optical property of the region 22 is at least one of associated and correlated with the type of the identification card 200. The region 22 may have the same optical property as the surface of the identification card 200 surrounding the region 22. The surface comprising the region 22 may have a spatially homogeneous optical property, such as dedicated color that encodes a dedicated identification card type 200. The first optical sensor 16 is configured to measure the optical property of the region 22 when the identification card 200 is removably held by the card holder 2.

The optical property comprises at least one parameter chosen from color, brightness and reflectivity. The first optical sensor 16 may be configured to measure the color by measuring at least one of hue, saturation, Chroma, chromaticity and grayness. For example, the first optical sensor 16 is configured to measure the color by measuring at least one of a value of R in red/green/blue (RGB) color space, a value of G in RGB color space, a value of B in RGB color space, a value of L* in Commission Internationale de I'Eclairage LAB (CIELAB) color space, a value of a* in CIELAB color space, a value of b* in CIELAB color space, a value of L in LCh color space, a value of C in LCh color space, and a value of h in LCh color space. The first optical sensor 16 may be configured to measure the color by measuring a spectrogram of light falling onto the first optical sensor 16.

The first optical sensor 16 may be configured to measure the brightness by measuring an absolute intensity of light falling onto the first optical sensor 16, for example an absolute intensity of light having a predetermined wavelength or a predetermined range of wavelengths. The predetermined range of wavelengths may define at least one of ultraviolet light, infrared light and visible light.

A light emitting element such as a light emitting diode (LED, not shown) may be comprised in the wearable badge 100 and arranged on the back portion 6 of the card holder 2. The light emitting element is configured to emit light for example essentially in the depth direction z through the slot 12. The first optical sensor 16 may be configured to measure the optical property by measuring a property of light received by the first optical sensor 16 (e.g., in relation to an intensity of light emitted by the light emitting element).

The processor 20 is configured to determine the type of the identification card 200 when removably held by the card holder 2 based on the measured optical property of the region 22. The processor 20 is configured to obtain a plurality of predetermined optical properties associated with different types of identification cards and select one of the different types of identification cards based on the measured optical property. In particular, the processor 20 is configured to compare the measured optical property with the plurality of predetermined optical properties and choose one of the predetermined optical properties which best matches the measured optical property to determine the type of the identification card 200. Each of the different predetermined types of identification cards may be associated with a different set and/or range of parameters comprised in the correlated predetermined optical property. For example, a first type of identification card is associated with a first value of L* in CIELAB color space and a brightness of 100 lumen, and a second type of identification card is associated with a reflectivity of 35% to 40%, a value of R=155, a value of G=100 and a value of B=185 in 256 bit RGB color space. The processor 20 may be configured to calculate one of the aforementioned parameters comprised in the optical property based on one or more other parameters comprised in the optical property. For instance, the processor 20 may be configured to calculate the brightness based on values of L, C and h in the LCh color space or to calculate the reflectivity based on a measured grayness.

The type of the identification card 200 may be an identification card issued only to a certain group of persons. Such groups may include surgeons, doctors, cleaning personnel, security personnel, patients, nurses, administration secretaries or else. For example, the type of the identification card 200 is an identification card issued only to doctors. The type of the identification card 200 may be an identification card issued during a certain time interval such as a certain year, month, week or else. For example, the type of the identification card 200 is an identification card issued during December 2019. The type may be a combination of the aforementioned types, for example an identification card issued only to cleaning personnel and security personnel during last week. Other types of identification cards are also possible.

A first parameter comprised in the optical property may encode a class type of identification cards, whereas a second parameter comprised in the optical property may encode a species type of the identification card comprised within the class. For example, the class type of identification cards corresponds to identification cards issued only to doctors, and the species type of the identification card corresponds to identification cards issued only to cardiologists.

A set of identification cards 200 may be provided, wherein at least some of the first regions 22 comprised by the set of identification cards 200 have different optical properties that encode different types of identification cards. For example, a blue region 22 of a first identification card encodes an identification card issued only for doctors since 1 January 2018. A red region 22 of a second identification card, the red region 22 having a brightness above a predetermined brightness threshold, may encode an identification card issued only for nurses during last month. Also, a region 22 of a third identification card, the region 22 having a reflectivity between 0% and 20%, for example encodes an identification card made of paper which is issued for all other groups of persons.

Some of the first regions 22 comprised by the set of identification cards 200 have optical properties that encode the same type of identification card. Therefore, by only measuring the optical property of the first region 22, it may not be possible to determine which of the identification cards encoding the same type is being held within the card holder 2. That is, the determined type of the identification card 200 does optionally not allow determining an association with a specific card holder. In other words, the determined type of the identification card 200 is not user-specific and thus represents anonymized data.

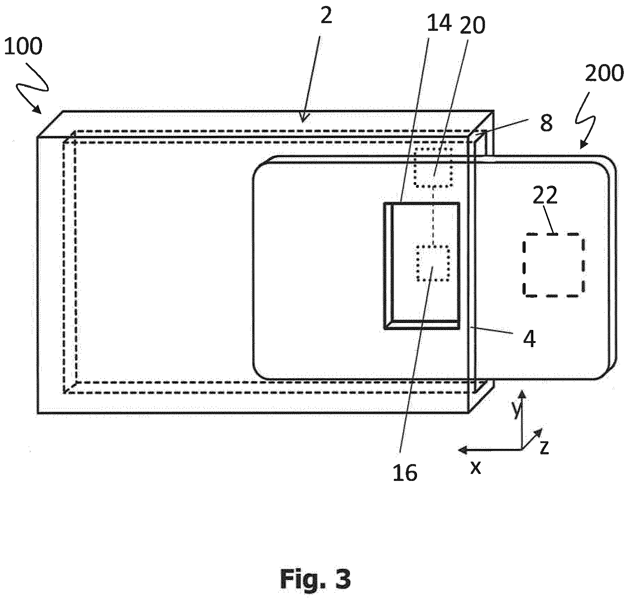

Fig. 3 shows the identification card 200 partially inserted into the wearable badge 100. As can be seen, the identification card 200 is slidably moved through the second opening 18 into the slot 12 formed within the card holder 2.

The first optical sensor 16 may be configured to measure an optical property of the surface of the identification card 200 while it is being slided into the slot. Such measurements of the first optical sensor 16 typically change in time in case the identification card 200 is being moved relative to the card holder 2, especially in case the surface of the identification card 200 adjacent to the region 22 has a plurality of different optical properties or an optical property different from the region 22. It can thus be assumed that, when measurements of the first optical sensor 16 do not change in time, the identification card 200 is stationarily held by the card holder.

In one exemplary configuration, the first opening 14 and the second optical sensor are arranged such that the second optical sensor is capable of performing a measurement through the first opening 14 when no identification card is held by the card holder 2, and also when the identification card 200 is fully inserted into the card holder 2. In other words, an optical path extending from the second optical sensor through the first opening 14 in the detection direction of the second optical sensor may only be blocked by the identification card 200 if the identification card 200 is partially, but not completely, inserted into the wearable badge 100. In this exemplary configuration, the second sensor is capable of measuring the optical pattern of the second region through the first opening 14 or the transparent portion, when no identification card is removably held by the card holder 2 and the component is positioned remote from the card holder 2, and also when the identification card 200 is fully inserted into the card holder 2 and the component is positioned remote from the card holder 2. The second optical sensor may in this exemplary configuration be arranged closer to the second opening 18 than the first optical sensor 16, as the first optical sensor 16 is arranged such that it is capable of measuring the optical property of the first region 22 of the identification card 200 in case the identification card 200 is completely inserted into the card holder 2.

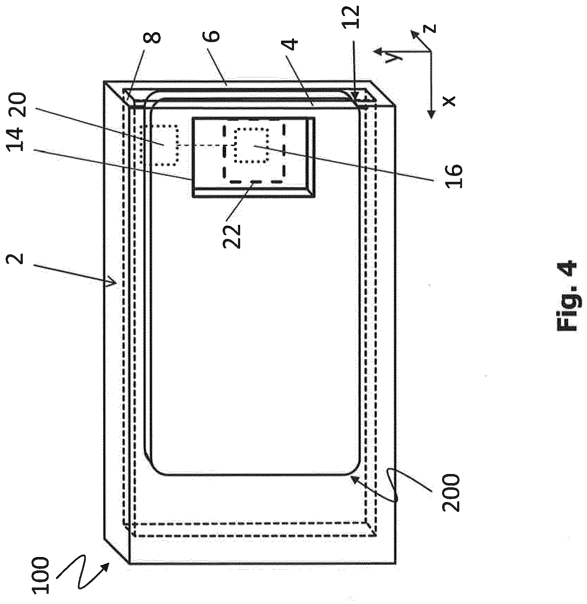

Fig. 4 shows the identification card 200 fully inserted into the wearable badge 100. The identification card 200 is in this case stationarily and removably held by the card holder 2 within the slot 12.

As can be seen, the region 22 is positioned such that the first optical sensor 16 is capable of measuring the optical property of the region 22. In particular, the region 22 is positioned within a detection range of the first optical sensor 16 and lies in the detection direction of the first optical sensor 16. The first optical sensor 16 is in this case not capable of performing a measurement through the first opening 14, as an optical path between the first optical sensor 16 and the first opening 14 is blocked by the identification card 200. Instead, the first optical sensor 16 is configured to measure the optical property of the region 22 of the surface of the identification card 200 removably held by the card holder 2.

The processor 20 is configured to obtain the measured optical property from the first optical sensor 16 and to determine the type of the identification card 200 based on the measured optical property of the region 22. In particular, the processor 20 is configured to determine the type of the identification card 200 based on a predetermined optical property associated with the type of the identification card 200.

The processor 20 is configured to detect that the identification card 200 is stationarily held by the card holder 2 when measurements of the first optical sensor 16 do not change in time, and to determine the type of the identification card 200 upon detecting that the identification card 200 is stationarily held by the card holder 2. The processor 20 may detect that the measurements do not change in time in case the measured optical property and/or the at least one parameter comprised in the measured optical property falls within a predetermined range or changes less than a predetermined percentage during a predetermined time interval. For example, the processor 20 determines that the measurements do not change in time if a measured value of brightness changes less than 5% during a time period of 2 seconds, or if a measured value of R in RGB color space changes less than 5 bits in 256 bit RGB color space during the time period of 2 seconds. Of course, other thresholds and time periods may be used.

The first optical sensor 16 is capable of measuring the optical property of the first region 22 when the identification card 200 is inserted in the slot 12 (see Fig. 4), whereas the first optical sensor 16 is configured to measure an optical property representing an empty badge if no identification card is being held by the card holder 2 (see Fig. 1). The processor 20 is configured to determine that no identification card is being held by the card holder 2 based on the measured optical property representing the empty badge 100.

Also, the first optical sensor 16 is capable of measuring an optical pattern of a second region of a surface of a component (not shown) positioned remote from the wearable badge 100 through the first opening 14, when no identification card is being held within the slot 12 and when the component is arranged in the detection direction of the first optical sensor 16. The component is for example a packaging of a medicament, an identifier of a patient, an identifier of a room or else. The optical pattern is for example a barcode, a QR code, an image or text.

In case a second optical sensor is provided in addition to the first optical sensor 16, the first opening 14 is arranged in the detection direction of the second optical sensor such that the second optical sensor is capable of measuring the optical pattern of the second region through the first opening 14, when no identification card is being held within the slot 12 (see Fig. 1) and when the component is arranged in the detection direction of the second optical sensor. Furthermore, in case the optical pattern is measured by the first optical sensor 16 or the second optical sensor, the processor 20 is configured to extract information represented by the measured optical pattern.

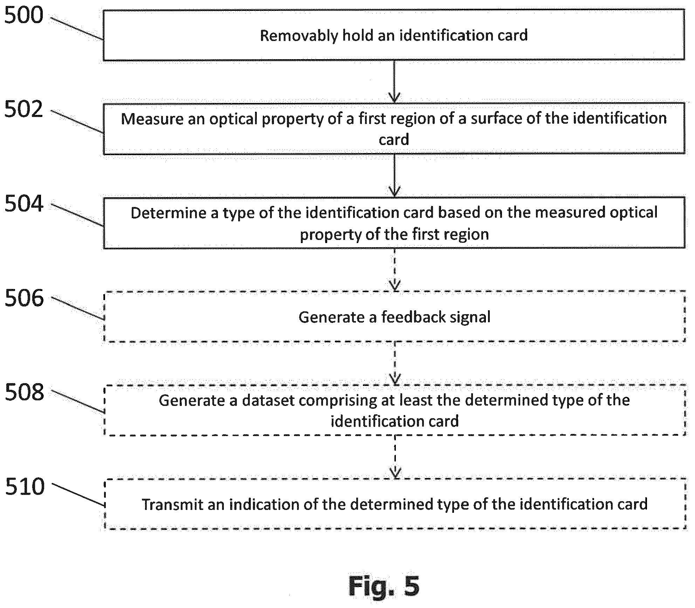

Fig. 5 shows a flow diagram an embodiment of a method of determining the type of the identification card. The method embodiment may be performed using the wearable badge 100 and the identification card 200 discussed with reference to Figs. 1 to 4 but is not limited in this regard.

In a step 500, the identification card 200 is removably held by the card holder 2 comprised in the wearable badge 100. In a subsequent step 502, the optical property of the first region 22 of the surface of the identification card 200 is measured by the first optical sensor 16 comprised in the wearable badge 100, while the identification card 200 is being removably held by the card holder 2. In a further subsequent step 504, the processor 20 comprised in the wearable badge 100 determines the type of the identification card 200 based on the measured optical property of the first region 22.

The method may comprise one or more additional steps, such as a step 506, a step 508 and a step 510 shown in Fig. 5. Steps 506 to 510 may be performed individually or collectively and in any order.

In step 506, an output unit comprised in the wearable badge 100 provides a feedback signal to a user of the badge. The processor 20 may be configured to trigger generation of the feedback signal by the output unit upon having determined the type of the identification card 200.

In step 508, the processor 20 generates a dataset comprising at least the determined type of the identification card 200. The processor 20 may be configured to generate the dataset when a predefined condition associated with the determined type of the identification card 200 is fulfilled.

In step 510, an interface unit comprised in the wearable badge 100 transmits an indication of the determined type of the identification card. The transmission is a unicast, multicast or broadcast transmission.

The method may also comprise additional steps not shown in Fig. 5, which are performed between step 502 and step 504. For example, in one additional step, the processor 20 may determine, based on the measurement of the first optical sensor 16, that an identification card is being stationarily held by the card holder 2. In a subsequent additional step, the processor 20 may compare the measured optical property with a previously measured optical property to determine whether the type of the identification card 200 is equal to a previous type of identification card determined based on the previously measured optical property. If the type of the identification card 200 is equal to the previous type, the previous type may be determined by the processor 20 as the type of the identification card 200. If the type of the identification card 200 is not equal to the previous type, the method may continue with step 504 as described above.

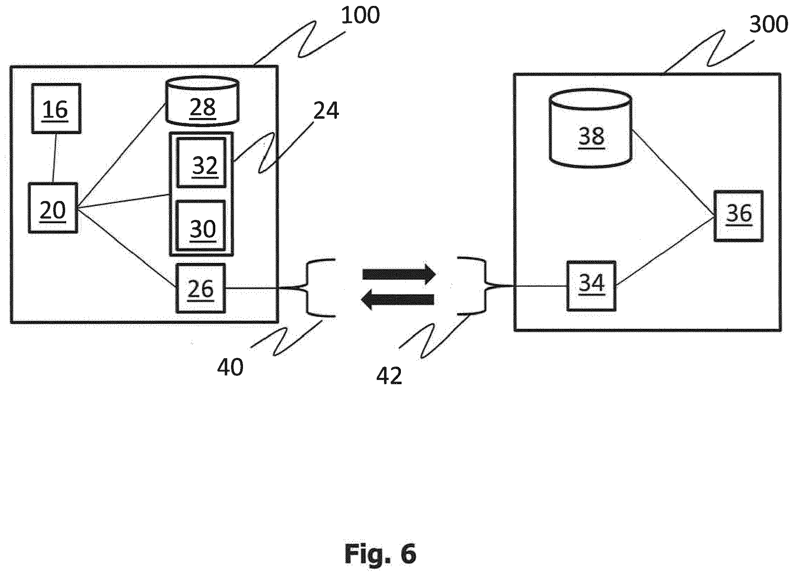

Fig. 6 shows an embodiment of a system comprising the wearable badge 100. The wearable badge 100 in this example comprises the processor 20 and the first optical sensor 16. The wearable badge 100 further comprises the output unit 24, the interface unit 26 and a storage unit 28.

The output unit 24 in this case comprises a display 30 and an optional speaker 32. Instead or in addition to the speaker 32, other units capable of providing a feedback signal to the user may be comprised in the output unit 24, for example a vibration unit for haptic feedback, an LED for further visual feedback, or else.

In case no identification card 200 is being removably held within the slot 12, and the component is held remotely from the wearable badge 100 such that the optical pattern on the second region is measured by the first or second optical sensor 16, the display 30 is configured to visualize the information extracted by the processor 20 from the measured optical pattern or to display information derived from the extracted information such. The processor 20 is configured to determine the feedback signal to be generated by the output unit 24 based on feedback information associated with the determined type of the identification card 200.

The interface unit 26 is configured to transmit the indication of the determined type of the identification card 200 to at least one receiver associated with the determined type of the identification card 200. In particular, the interface unit 26 may transmit the generated dataset. In case no identification card 200 is removably held in the slot 12, the processor 20 may determine that the wearable badge 100 is empty. In this case, the processor 20 is configured to generate a dataset including an indication of an empty badge. In case no identification card 200 is removably held in the slot 12, but the component comprising the second region is arranged remotely from the wearable badge 200 such that the first or second optical sensor 16 is capable of measuring the optical pattern of the second region, the processor 20 may extract information from the measured optical pattern and generate a dataset comprising the extracted information or an indication of the extracted information.

The storage unit 28 is configured to store at least the predetermined optical property associated with the type of the identification card 200 (e.g., in a dataset). The processor 20 is configured to retrievably store the generated dataset in the storage unit 28. The storage unit 28 may further be configured to store the extracted information, the predefined condition associated with the determined type of the identification card 200, the feedback information associated with the determined type of the identification card 200 and/or connection information of the at least one receiver associated with the determined type of the identification card 200. A communication of the interface unit 26 with the at least one receiver is for example established based on the connection information.

In one example, the dataset generated by the processor 20 further comprises at least one of the predefined condition, the feedback information and the connection information. The dataset may further comprise at least one of a timestamp, information obtained from the storage unit 28, information obtained from the central control unit 300, and identification information of the wearable badge 100. The processor 20 may be configured to determine the dataset at least partially based on a previous dataset stored in the storage unit 28 or provided via the interface unit 26.

The system shown in Fig. 6 further comprises a central control unit 300 configured to communicate with a set of wearable badges 100. The central control unit 300 comprises an interface unit 34, a processor 36 and a storage unit 38.

The interface unit 34 of the central control unit 300 is configured to receive a signal from the interface unit 26 of the wearable badge 100, and to transmit a signal to the interface unit 26 of the wearable badge 100. This communication between the two interface units is indicated in Fig. 6 by two thick arrows. The interface unit 34 thus may correspond to or comprise the at least one receiver. Also indicated are a first antenna 40 comprised in the wearable badge 100 and a second antenna 42 comprised in the central control unit 300. The antennas 40, 42 enable a wireless communication between the two interface units 26 and 34. Alternatively, a wired connection may be provided between the wearable badge 100 and the central control unit 300 (e.g., via a cable that removably attached to the wearable badge 100).

The processor 20 may obtain one or more of the predetermined optical property associated with the type of the identification card 200, the predefined condition associated with the type of the identification card 200, the feedback information associated with the type of the identification card 200 and the connection information associated with the type of the identification card 200 from the central control unit 300 via the interface unit 26. For example, the interface unit 26 transmits the dataset or the extracted information to the central control unit 300 which then transmits at least one of additional information correlated with the dataset, additional information correlated with the extracted information, and the feedback information to the wearable badge 100.

In case the extracted information is associated with a certain patient, the processor 36 of the central control unit 300 may determine, upon receiving the extracted information, whether the certain patient is a risk for the user of the wearable badge 100, for example in case a patient file of the certain patient stored in the storage unit 38 comprises an indication that the certain patient is infected with multi-resistant bacteria. Upon on this determination, the processor 36 may determine the feedback information and trigger the interface unit 34 to transmit the feedback information to the wearable badge 100. In this case, the feedback signal generated by the output unit 24 may comprise a warning such as a warning text displayed on the display 30 of the wearable badge 100.

The group of persons may, as noted above, comprise or consist of doctors, nurses, security personnel, patients or else. The group of persons may comprise or consist of persons working in a certain department or clinical station of a hospital. The group of persons may comprise or consist of doctors having a certain specialisation such as oncologists, neurosurgeons, cardiologists or else. The determined type of the identification card 200 may correspond to an identification card issued for the group of persons. That is, the determined type of the identification card 200 is correlated or associated with the group of persons. Thus, it can be determined that a user of the wearable badge 100, who is assumed to be identical to an owner of the identification card 200 removably held by the card holder 2, belongs to the group of persons.

In one example, the feedback information comprises a number of disinfections of a group of persons performed during a predetermined time interval, a number of personnel working in a given hospital during the predetermined time interval, and a number of patient days. As is known, one patient day indicates a presence of one patient for one day in the given hospital. Based on the feedback information, in particular based on the number of disinfections of the group of persons to which the user of the wearable badge 100 belongs, the number of personnel and the patient days, the processor 20 may determine that the user should use disinfection more often. Consequently, the processor 20 may be configured to determine the feedback signal such that it indicates that the user of the wearable badge 100 should use disinfection more often. In this case, the feedback signal may be a warning tone output by the speaker 32, a visual indication shown on the display 30 or else. The number of disinfections may be obtained by the wearable badge 100 via communication with dispensers for disinfectants. For example, each time a wearer of the badge operates such a dispenser, the number of disinfections stored by the wearable badge 100 may be increased by one. In summary, the feedback information may comprise statistical information correlated with a certain group of persons, wherein the type of the identification card 200 is associated with the certain group of persons.

In another example, the feedback information comprises an instruction for the group of persons. In case the group of persons consists of cleaning personnel, the feedback signal determined by the processor 20 based on the feedback information may indicate that a certain disinfection bottle needs to be refilled or replaced. The feedback signal may comprise a visual indication shown on the display 30. The visual indication for example comprises an indication of a location of the disinfection bottle, a type of the disinfection bottle, a content of the disinfection bottle or else. The feedback signal may be generated upon the person wearing the badge 100 approaching a particular dispenser for disinfectants (e.g., triggered by communication between the dispenser and the wearable badge 100).

In case the group of persons consists of doctors, the feedback information may comprise a task scheduled for a certain date and time. The task may be a disinfection tutorial class, a planned surgery, a planned check of a patient or else. The visual indication in this case comprises an indication of the task and the certain date and time. The feedback signal may comprise a reminder such as one or more of a warning tone output by the speaker 32, a vibration output by the vibration unit or a light signal output by the LED, wherein the reminder may be output a predetermined time before the certain date and time.

In case the group of persons consists of doctors, the feedback information may comprise a patient file of a certain patient and at least one task associated with the patient file. The processor 20 may extract information on the certain patient and the at least one task from the feedback information. The visual indication in this case comprises an indication of the task and the certain patient. For instance, a text may be displayed on the display 30 instructing the user of the wearable badge 100 to perform the task within a predetermined time interval.

The predefined condition may be associated with the determined type of the identification card 200. For instance, in case the group of persons consists of doctors, the predefined condition may define that the dataset is generated anew every 30 seconds. In case the group of persons consists of cleaning personnel, the predefined condition may define that the dataset is generated only once and upon the identification card 200 is completely inserted into the slot 12.

The processor 20 may determine that the determined type of the identification card 200 is classified as important. For example, the processor 20 determines that the determined type of the identification card 200 is associated with an important group of persons consisting of doctors having a certain specialization. Subsequently, an indication of the type of the identification card 200 and/or of the certain specialization may be transmitted by the interface unit 26. The processor 20 may further obtain the connection information from the storage unit 28 or the central control unit 300, wherein the connection information is specific for the certain specialization. For instance, in case the determined type of the identification card 200 is associated with a group of persons consisting of cardiologists, the connection information may enable a connection to receivers carried by another group of persons such as nurses working in the cardiology department of the hospital.

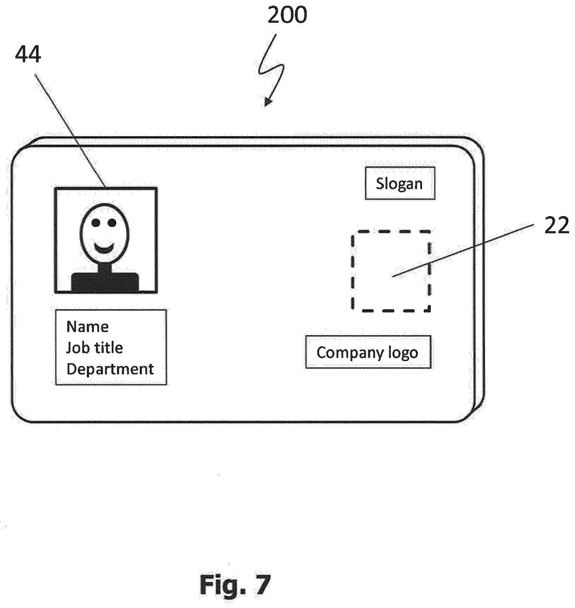

Fig. 7 shows an embodiment of the identification card 200. While a surface of a back side of the identification card 200 comprises the first region 22, a surface of a front side of the identification card 200 may comprise an image 44 or other personal information of a card holder. The card holder, also referred to as card owner, is assumed to correspond to the user of the wearable badge 100.

The surface of the front side of the identification card 200 in the shown example further comprises identification information of the card holder in the form of text and/or graphics. In the example of Fig. 7, a name of the card holder, a job title of the card holder and a department in which the card holder works are printed on the front side of the identification card 200. Also, a company logo and a slogan of a company or the hospital are depicted on the front side of the identification card shown in Fig. 7. Of course, the front side may comprise some of, none of or more than the information shown in Fig. 7, as long as the region 22 is provided on the identification card 200.

As noted above, a plurality of identification cards 200 of the same type may be provided, for example a plurality of identification cards 200 of the same type issued to doctors only. By determining the type of the identification card 200 based on the measured optical property of the first region 22, it is thus not possible to provide a person-specific monitoring, but only a monitoring of a certain type of identification card. In other words, an anonymization of data retrievable from the wearable device 100, such as the dataset, is ensured at all times. No additional data anonymization needs to be performed after having measured the optical property or after having determined the type of the identification card 200.

Also, identification cards without RFID chips or magnet strips may be used with the wearable badge 100, as the determination of the type of the inserted identification card 200 is based on the measured optical property. For example, identification cards having different colors encoding different groups of persons can be inserted into the wearable badge 100. In this case, and the processor 20 may determine the type of an inserted identification card 200 based on the color of the first region 22. The wearable badge 100 is thus for example compliant with existing identification cards commonly used in hospitals.

## Claims

1. A wearable badge (100) for holding an identification card (200), the badge (100) comprising:
a card holder (2) configured to removably hold an identification card (200);
a first optical sensor (16) configured to measure an optical property of a first region (22) of a surface of the identification card (200) when removably held by the card holder (2); and
a processor (20) configured to determine a type of the identification card (200) based on the measured optical property of the first region (22).

2. The badge (100) of claim 1, wherein the optical property comprises at least one parameter chosen from color, brightness and reflectivity.

3. The badge (100) of any of the preceding claims, wherein the processor (20) is configured to determine the type of the identification card (200) based on a predetermined optical property associated with the type of the identification card (200).

4. The badge (100) of claim 3, further comprising:
a storage unit (28) retrievably storing at least the predetermined optical property associated with the type of the identification card (200).

5. The badge (100) of any of the preceding claims, wherein the processor (20) is configured to determine the type of the identification card (200) upon detecting that the identification card (200) is stationarily held by the card holder (2).

6. The badge (100) of claims 5, wherein the processor (20) is configured to detect that the identification card (200) is stationarily held by the card holder (2) when measurements of the first optical sensor (16) do not change in time.

7. The badge (100) of any of the preceding claims,
wherein the first optical sensor (16) is further configured to, if no identification card is being held by the card holder (2), measure an optical property representing an empty badge,
wherein the processor (20) is further configured to determine that no identification card is being held by the card holder (2) based on the measured optical property representing the empty badge.

8. The badge (100) of any of the preceding claims,
wherein the first optical sensor (16) or a second optical sensor comprised in the badge (100) is configured to, when no identification card is being held by the card holder (2) and a component is positioned remote from the card holder (100), measure an optical pattern of a second region of a surface of the component,
wherein the processor (20) is further configured to extract information represented by the measured optical pattern.

9. The badge (100) of claim 8, wherein the card holder (2) comprises a first opening (14) or a transparent portion arranged in a detection direction of at least one sensor chosen from the first optical sensor (16) and the second optical sensor, wherein the opening (14) or transparent portion is arranged such that the at least one sensor is capable of measuring the optical pattern of the second region through the first opening (14) or the transparent portion, when no identification card is removably held by the card holder (2) and the component is positioned remote from the card holder (2).

10. The badge (100) of any of the preceding claims, further comprising:
an output unit (24) configured to provide a feedback signal to a user of the badge (100).

11. The badge (100) of claim 10 and any of claims 8 and 9, wherein the output unit (24) comprises a display (30) configured to visualize the extracted information or information derived from the extracted information.

12. The badge (100) of claim 10 or 11, wherein the processor is further configured to trigger generation of the feedback signal by the output unit (24) upon having determined the type of the identification card (200).

13. The badge (100) of any of claims 10 to 12, wherein the processor (20) is further configured to determine, based on feedback information associated with the determined type of the identification card (200), the feedback signal to be generated by the output unit (24).

14. The badge (100) of any of the preceding claims, wherein the card holder (2) is configured to at least partially encase the identification card (200) to removably hold the identification card (200), and wherein the card holder (2) comprises a second opening (18) configured such that the identification card (200) can be slided into the card holder (2) through the second opening (18).

15. The badge (100) of any of the preceding claims, wherein the processor (20) is further configured to generate a dataset comprising at least the determined type of the identification card (200) and to retrievably store the dataset.

16. The badge (100) of claim 15, wherein the processor (20) is further configured to generate the dataset when a predefined condition associated with the determined type of the identification card (200) is fulfilled.

17. The badge (100) of any of the preceding claims, further comprising an interface unit (26) configured to transmit an indication of the determined type of the identification card (200).

18. The badge (100) of claim 17, wherein the interface unit (26) is configured to transmit the indication to at least one receiver (300) associated with the determined type of the identification card (200).

19. A system comprising:
the wearable badge (100) of any of the preceding claims; and
a set of identification cards (200), wherein at least some of the first regions (22) comprised by the set of identification cards (200) have different optical properties that encode different types of identification cards.

20. A method of determining a type of an identification card (200), the method comprising:
removably holding (500), by a card holder (2) comprised in a wearable badge (100), an identification card (200);
measuring (502), by a first optical sensor (16) comprised in the wearable badge (100), an optical property of a first region (22) of a surface of the identification card (200); and
determining (504), by a processor (20) comprised in the wearable badge (100), a type of the identification card (200) based on the measured optical property of the first region (22).

## Amended claims

### Amended claims in accordance with Rule 137(2) EPC.

1. A wearable badge (100) for holding an identification card (200), the badge (100) comprising:
a card holder (2) configured to removably hold an identification card (200); and
a first optical sensor (16) configured to measure an optical property of a first region (22) of a surface of the identification card (200) when removably held by the card holder (2),
**characterized by**
a processor (20) configured to determine a type of the identification card (200) based on the measured optical property of the first region (22), wherein the optical property comprises at least one parameter chosen from color, brightness and reflectivity.

2. The badge (100) of claim 1, wherein the processor (20) is configured to determine the type of the identification card (200) based on a predetermined optical property associated with the type of the identification card (200).

3. The badge (100) of claim 2, further comprising:
a storage unit (28) retrievably storing at least the predetermined optical property associated with the type of the identification card (200).

4. The badge (100) of any of the preceding claims, wherein the processor (20) is configured to determine the type of the identification card (200) upon detecting that the identification card (200) is stationarily held by the card holder (2).

5. The badge (100) of claims 4, wherein the processor (20) is configured to detect that the identification card (200) is stationarily held by the card holder (2) when measurements of the first optical sensor (16) do not change in time.

6. The badge (100) of any of the preceding claims,
wherein the first optical sensor (16) is further configured to, if no identification card is being held by the card holder (2), measure an optical property representing an empty badge,
wherein the processor (20) is further configured to determine that no identification card is being held by the card holder (2) based on the measured optical property representing the empty badge.

7. The badge (100) of any of the preceding claims,
wherein the first optical sensor (16) or a second optical sensor comprised in the badge (100) is configured to, when no identification card is being held by the card holder (2) and a component is positioned remote from the card holder (100), measure an optical pattern of a second region of a surface of the component,
wherein the processor (20) is further configured to extract information represented by the measured optical pattern.

8. The badge (100) of claim 7, wherein the card holder (2) comprises a first opening (14) or a transparent portion arranged in a detection direction of at least one sensor chosen from the first optical sensor (16) and the second optical sensor, wherein the opening (14) or transparent portion is arranged such that the at least one sensor is capable of measuring the optical pattern of the second region through the first opening (14) or the transparent portion, when no identification card is removably held by the card holder (2) and the component is positioned remote from the card holder (2).

9. The badge (100) of any of the preceding claims, further comprising:
an output unit (24) configured to provide a feedback signal to a user of the badge (100).

10. The badge (100) of claim 7 and 9 or claim 8 and 9, wherein the output unit (24) comprises a display (30) configured to visualize the extracted information or information derived from the extracted information.

11. The badge (100) of claim 9 or 10, wherein the processor is further configured to trigger generation of the feedback signal by the output unit (24) upon having determined the type of the identification card (200).

12. The badge (100) of any of claims 9 to 11, wherein the processor (20) is further configured to determine, based on feedback information associated with the determined type of the identification card (200), the feedback signal to be generated by the output unit (24).

13. The badge (100) of any of the preceding claims, wherein the card holder (2) is configured to at least partially encase the identification card (200) to removably hold the identification card (200), and wherein the card holder (2) comprises a second opening (18) configured such that the identification card (200) can be slided into the card holder (2) through the second opening (18).

14. The badge (100) of any of the preceding claims, wherein the processor (20) is further configured to generate a dataset comprising at least the determined type of the identification card (200) and to retrievably store the dataset.

15. The badge (100) of claim 14, wherein the processor (20) is further configured to generate the dataset when a predefined condition associated with the determined type of the identification card (200) is fulfilled.

16. The badge (100) of any of the preceding claims, further comprising an interface unit (26) configured to transmit an indication of the determined type of the identification card (200).

17. The badge (100) of claim 16, wherein the interface unit (26) is configured to transmit the indication to at least one receiver (300) associated with the determined type of the identification card (200).

18. A system comprising:
the wearable badge (100) of any of the preceding claims; and
a set of identification cards (200), wherein at least some of the first regions (22) comprised by the set of identification cards (200) have different optical properties that encode different types of identification cards.

19. A method of determining a type of an identification card (200), the method comprising:
removably holding (500), by a card holder (2) comprised in a wearable badge (100), an identification card (200); and
measuring (502), by a first optical sensor (16) comprised in the wearable badge (100), an optical property of a first region (22) of a surface of the identification card (200),
**characterized by**
determining (504), by a processor (20) comprised in the wearable badge (100), a type of the identification card (200) based on the measured optical property of the first region (22), wherein the optical property comprises at least one parameter chosen from color, brightness and reflectivity.
